# EUROPEAN PATENT SPECIFICATION

(11) **EP 2 670 070 B1**
(45) Date of publication and mention of the grant of the patent: **03.05.2017**
(21) Application number: 12757778.1
(22) Date of filing: 08.03.2012
(51) Int. Cl.: H04W 72/08, H04B 7/26, H04J 11/00

(54) **METHOD AND DEVICE FOR CONTROLLING INTERFERENCE BETWEEN CELLS IN WIRELESS COMMUNICATION SYSTEM**
VERFAHREN UND VORRICHTUNG ZUR STEUERUNG DER INTERFERENZ ZWISCHEN ZELLEN IN EINEM DRAHTLOSEN KOMMUNIKATIONSSYSTEM
PROCÉDÉ ET DISPOSITIF DE MAÎTRISE DE BROUILLAGE ENTRE CELLULES DANS UN SYSTÈME DE COMMUNICATION SANS FIL

(30) Priority: 11.03.2011 US 201161451609 P; 05.04.2011 US 201161471699 P
(43) Date of publication of application: 04.12.2013
(73) Proprietor: LG Electronics Inc., Seoul 150-721 (KR)
(72) Inventor: SEO, Inkwon, Anyang-si Gyeonggi-do 431-080 (KR); SEO, Hanbyul, Anyang-si Gyeonggi-do 431-080 (KR); KIM, Kijun, Anyang-si Gyeonggi-do 431-080 (KR)
(74) Representative: Cabinet Plasseraud
(86) International application number: PCT/KR2012/001691
(87) International publication number: WO 2012/124931

(56) References cited:
- KR-A- 20090 094 752
- US-A1- 2010 208 687
- US-A1- 2010 216 497
- US-A1- 2010 255 854
- US-A1- 2011 014 909
- NEW POSTCOM: "ABS signaling considerations for LTE-A TDD", 3GPP DRAFT; R1-105940_ABS SIGNALING CONSIDERATIONS FOR LTE-A TDD_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Jacksonville, USA; 20101115, 11 November 2010 (2010-11-11), XP050489846, [retrieved on 2010-11-11]
- CATT: "Uplink-downlink subframe configuration information for the served cell", 3GPP DRAFT; R3-082018_SERVED CELL INFORMATION_DISCUSSION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Jeju, Korea; 20080818 - 20080822, 13 August 2008 (2008-08-13), XP050609655, [retrieved on 2008-08-13]

## Description

### [Technical Field]

The present invention relates to a wireless communication system, and more particularly, to a method and device for controlling inter-cell interference. A wireless communication system may support a homogeneous and/or heterogeneous network system.

### [Background Art]

Wireless communication systems have been diversified in order to provide various types of communication services such as voice or data service. In general, a wireless communication system is a multiple access system capable of sharing available system resources (bandwidth, transmit power or the like) so as to support communication with multiple users. Examples of the multiple access system include a Code Division Multiple Access (CDMA) system, a Frequency Division Multiple Access (FDMA) system, a Time Division Multiple Access (TDMA) system, an Orthogonal Frequency Division Multiple Access (OFDMA) system, a Single Carrier Frequency Division Multiple Access (SC-FDMA) system, a Multi Carrier Frequency Division Multiple Access (MC-FDMA) system and the like.

The document NEW POSTCOM "ABS signaling considerations for LTE-A TDD", R1-105940, 11 November 2010, discloses an Almost Blank Subframe (ABS) pattern design configurations for Time Division Duplex (TDD).

The document CATT "Uplink-downlink subframe configuration information for the served cell", R3-082018, 13 August 2008, discusses the use of Uplink-downlink subframe configuration information for TDD, which is taken as one of the served cell information.

The document US2011/014909 discloses a method of transmitting an interference information signal in a wireless communication system.

### [Disclosure]

### [Technical Problem]

An object of the present disclosure devised to solve the problem lies in a method and device for efficiently controlling inter-cell interference in a wireless communication system. Another object of the present disclosure is to provide signaling and signal processing for controlling inter-cell interference and a device therefor. Another object of the present disclosure is to provide a method and device for efficiently allocating resources to cell edge user equipment (UE).

The technical problems solved by the present invention are not limited to the above technical problems and those skilled in the art may understand other technical problems from the following description.

### [Technical Solution]

The reader is referred to the appended independent claims. Some preferred features are laid out in thr dependent claims.

The object of the present disclosure can be achieved by providing a method of controlling inter-cell interference at a serving cell in a time division duplex (TDD) wireless communication system, including transmitting subframe allocation information indicating one or more uplink (UL) subframes to a neighboring cell, and restricting UL transmission activity in the one or more UL subframes.

In another aspect of the present disclosure, provided herein is a base station configured to control inter-cell interference in a time division duplex (TDD) wireless communication system, including a radio frequency (RF) unit, and a processor, wherein the processor transmits subframe allocation information indicating one or more uplink (UL) subframes to a neighboring cell and restricts UL transmission activity in the one or more UL subframes.

Radio frames of the serving cell and the neighboring cell may have different uplink-downlink (UL-DL) configurations, and the one or more UL subframes may collide with a downlink (DL) subframe of the neighboring cell.

The subframe allocation information may include a bitmap used to indicate a DL almost blank subframe (ABS) pattern and one or more bits corresponding to one or more UL subframes in the bitmap may be set to predetermined values.

The restricting the UL transmission activity may include restricting UL scheduling to a predetermined user equipment (UE) of the serving cell.

The method may further include receiving information indicating the predetermined UE from the neighboring cell.

The predetermined UE may be determined based on a UL measurement value generated by a UE of the neighboring cell and the UL measurement value may be a measurement value of a UL signal transmitted from a UE located within the serving cell.

The UL signal may include a sounding reference signal (SRS).

### [Advantageous Effects]

According to the present disclosure, it is possible to efficiently control inter-cell interference in a wireless communication system. In addition, it is possible to perform signaling and signal processing for controlling inter-cell interference. In addition, it is possible to efficiently allocate resources to cell edge user equipment (UE).

The effects of the present disclosure are not limited to the above-described effects and other effects which are not described herein will become apparent to those skilled in the art from the following description.

### [Description of Drawings]

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a diagram showing a network structure of an Evolved Universal Mobile Telecommunications System (E-UMTS);
FIG. 2 is a diagram showing physical channels used in a 3^{rd} Generation Partnership Project (3GPP) system as an example of a wireless communication system and a general signal transmission method using the same;
FIG. 3 is a diagram showing the structure of a radio frame;
FIG. 4 is a diagram showing a resource grid of a downlink slot;
FIG. 5 is a diagram showing the structure of a downlink frame;
FIG. 6 is a diagram showing the structure of an uplink subframe;
FIG. 7 is a diagram showing the structure of an uplink subframe in detail;
FIG. 8 is a diagram showing a carrier aggregation (CA) communication system;
FIG. 9 is a diagram showing cross-carrier scheduling;
FIG. 10 is a diagram showing inter-cell interference due to a heterogeneous UL-DL configuration in a TDD system;
FIG. 11 is a diagram showing a method of solving inter-cell interference according to an embodiment of the present invention;
FIG. 12 is a diagram showing a method of solving inter-cell interference according to another embodiment of the present invention;
FIG. 13 is a diagram showing a method of solving inter-cell interference according to another embodiment of the present invention;
FIG. 14 is a diagram showing the case in which DL transmission of one cell serves as interference in UL transmission of another cell;
FIG. 15 is a diagram showing a signaling process according to UL/DL configuration change;
FIG. 16 is a diagram showing cell-edge UE detection and inter-cell interference control according to the present invention; and
FIG. 17 is a diagram showing a base station and a UE to which the present invention is applicable.

### [Best Mode]

The following embodiments of the present invention may be utilized in various radio access systems such as a Code Division Multiple Access (CDMA) system, a Frequency Division Multiple Access (FDMA) system, a Time Division Multiple Access (TDMA) system, an Orthogonal Frequency Division Multiple Access (OFDMA) system, a Single Carrier Frequency Division Multiple Access (SC-FDMA) system, or a Multi Carrier Frequency Division Multiple Access (MC-FDMA) system. CDMA may be implemented as radio technology such as Universal Terrestrial Radio Access (UTRA) or CDMA2000. TDMA may be implemented as radio technology such as Global System for Mobile communications (GSM)/General Packet Radio Service (GPRS)/Enhanced Data Rates for GSM Evolution (EDGE). OFDMA may be implemented as radio technology such as IEEE 802.11 (Wi-Fi), IEEE 802.16 (WiMAX), IEEE 802-20 or E-UTRA (Evolved UTRA). UTRA is part of the Universal Mobile Telecommunications System (UMTS). A 3^{rd} Generation Partnership Project Long Term Evolution (3GPP LTE) communication system is part of the E-UMTS (Evolved UMTS) which employs the E-UTRA. The LTE-Advanced (LTE-A) is an evolved version of the 3GPP LTE. For clarity, the following description focuses on the 3GPP LTE and LTE-A system. However, the technical spirit of the present invention is not limited thereto.

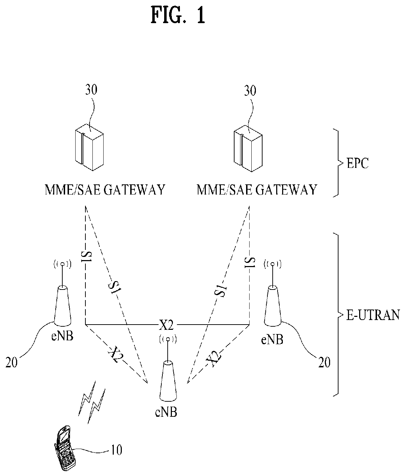

FIG. 1 is a diagram showing a network structure of an E-UMTS. The E-UMTS is also referred to as a Long Term Evolution (LTE) system. Communication networks are widely distributed to provide various communication services such as voice and packet data services.

Referring to FIG. 1, the E-UMTS mainly includes an Evolved UMTS Terrestrial Radio Access Network (E-UTRAN), an Evolved Packet Core (EPC) and one or more User Equipments (UEs). The E-UTRAN includes one or more base stations (eNBs) 20 and a plurality of UEs 10 may be located per cell. eNBs are connected via an X2 interface. An X2 user plane interface X2-U is defined between eNBs. The X2-U interface provides non-guaranteed delivery of a user plane PDU. An X2 control plane interface X2-CP is defined between two neighboring eNBs. X2-CP performs functions such as context delivery between eNBs, control of a user plane tunnel between a source eNB and a target eNB, delivery of a handover related message, uplink load management, etc. The eNB is connected to the UE via a radio interface and is connected to the EPC via an S1 interface. An S1 user plane interface S1-U is defined between the eNB and a serving gateway (S-GW). An S1 control plane interface S1-MME is defined between the eNB and a mobility management entity (MME). The S1 interface performs an EPS bearer service management function, a non-access stratum (NAS) signaling transport function, a network sharing function, an MME load balancing function, etc.

In a wireless communication system, a UE receives information from an eNB in downlink (DL) and transmits information to an eNB in uplink (UL). Information transmitted and received between an eNB and a UE includes data and a variety of control information and various physical channels exist according to the kind/usage of information transmitted or received by the UE.

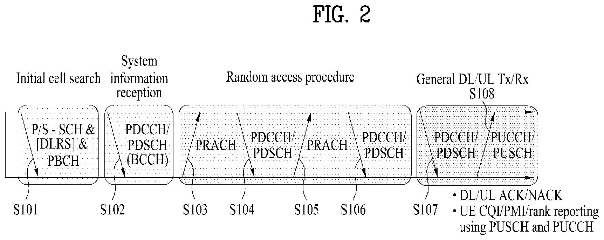

FIG. 2 is a diagram showing physical channels used in a 3^{rd} Generation Partnership Project (3GPP) Long Term Evolution (LTE) system and a general signal transmission method using the same.

Referring to FIG. 2, a UE performs an initial cell search operation such as synchronization with an eNB in step S101, when power is turned on or the UE enters a new cell. The UE may receive a Primary Synchronization Channel (P-SCH) and a Secondary Synchronization Channel (S-SCH) from the eNB, perform synchronization with the eNB, and acquire information such as a cell ID. Thereafter, the UE may receive a physical broadcast channel from the eNB so as to acquire broadcast information within the cell. Meanwhile, the UE may receive a Downlink Reference Signal (DL RS) so as to confirm a downlink channel state in the initial cell search step.

The UE which has completed the initial cell search may receive a Physical Downlink Control Channel (PDCCH) and a Physical Downlink Shared Channel (PDSCH) according to information about the PDCCH so as to acquire more detailed system information, in step S102.

Meanwhile, the UE may perform a Random Access Procedure (RACH) in steps S103 to S106, for connection to the eNB. In this case, the UE may transmit a preamble through a Physical Random Access Channel (PRACH) (S103), and receive a response message to the preamble through the PDCCH and the PDSCH corresponding thereto (S104). In contention-based random access, a contention resolution procedure including transmission of an additional PRACH (S105) and reception of the PDCCH and the PDSCH corresponding thereto (S106) may be performed.

The UE which has performed the above procedures may perform PDCCH/PDSCH reception (S107) and Physical Uplink Shared Channel PUSCH)/Physical Uplink Control Channel (PUCCH) transmission (S108) as a general uplink/downlink signal transmission procedure. Control information transmitted from the UE to the eNB is collectively referred to as uplink control information (UCI). UCI includes hybrid automatic repeat and request acknowledgement (ACK)/negative-ACK (NACK), scheduling request (SR), channel state information (CSI), etc. The CSI includes a channel quality indicator (CQI), a precoding matrix index (PMI), a rank indicator (RI), etc. The UCI may be generally transmitted via a PUCCH. However, if control information and traffic data are simultaneously transmitted, the UCI may be transmitted via a PUSCH. In addition, the UCI may be aperiodically transmitted via a PUSCH according to a network request/instruction.

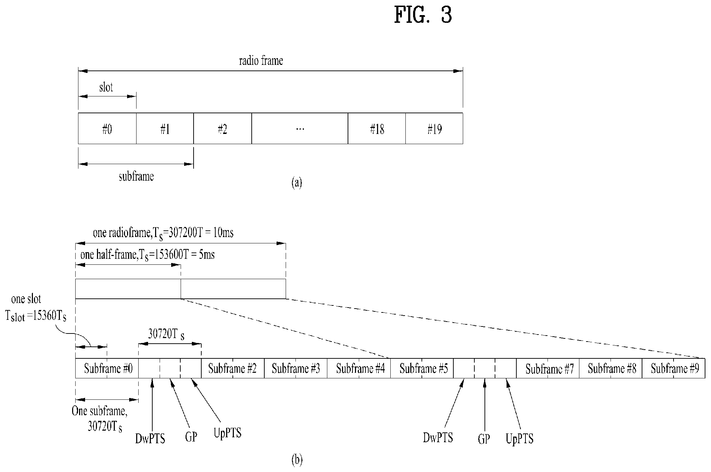

FIG. 3 is a diagram showing the structure of a radio frame. In a cellular OFDM radio packet communication system, uplink/downlink data packet transmission is performed in subframe (SB) units and one subframe is defined as a predetermined time interval including a plurality of OFDM symbols. The 3GPP LTE standard supports a type 1 radio frame structure applicable to frequency division duplex (FDD) and a type 2 radio frame structure applicable to time division duplex (TDD).

FIG. 3(a) shows the structure of radio frame type 1. A downlink radio frame includes 10 subframes and one subframe includes two slots in a time domain. A time required to transmit one subframe is referred to as a transmission time interval (TTI). For example, the length of one subframe may be 1 ms and the length of one slot may be 0.5 ms. One slot includes a plurality of OFDM symbols in a time domain and includes a plurality of resource blocks (RBs) in a frequency domain. In a 3GPP LTE system, since OFDM is used in downlink, an OFDM symbol indicates one symbol interval. The OFDM symbol may be referred to as an SC-FDMA symbol or symbol interval. A resource block (RB) as a resource allocation unit may include a plurality of consecutive subfcarriers in one slot.

The number of OFDM symbols included in one slot may be changed according to the configuration of a Cyclic Prefix (CP). The CP includes an extended CP and a normal CP. For example, if the OFDM symbols are configured by the normal CP, the number of OFDM symbols included in one slot may be seven. If the OFDM symbols are configured by the extended CP, the length of one OFDM symbol is increased, the number of OFDM symbols included in one slot is less than that of the normal CP. In case of the extended CP, for example, the number of OFDM symbols included in one slot may be six. If a channel state is unstable, for example, if a user equipment (UE) moves at a high speed, the extended CP may be used in order to further reduce inter-symbol interference.

In case of using the normal CP, since one slot includes seven OFDM symbols, one subframe includes 14 OFDM symbols. At this time, the first at most three OFDM symbols of each subframe may be allocated to a Physical Downlink Control Channel (PDCCH) and the remaining OFDM symbols may be allocated to a Physical Downlink Shared Channel (PDSCH).

FIG. 3(b) is a diagram showing the structure of the radio frame type 2. The radio frame type 2 includes two half frames, each of which includes five subframes. A subframe may be one of a downlink subframe, an uplink subframe or a special subframe. The special subframe may be used as a downlink subframe or an uplink subframe according to TDD configuration. The special subframe includes a downlink pilot time slot (DwPTS), a guard period (GP), and an uplink pilot time slot (UpPTS). The DwPTS is used for initial cell search, synchronization and channel estimation at a UE. The UpPTS is used for channel estimation at an eNB and uplink transmission synchronization of a UE. The guard period is used to remove interference occurring in uplink due to multi-path delay of a downlink signal between uplink and downlink.

Table 1 shows an uplink-downlink (UL-DL) configuration defined in an LTE TDD system.

**Table 1**

| Uplink-downlink configuration | Downlink-to-Uplink Switch-point periodicity | Subframe number | | | | | | | | | |
|---|---|---|---|---|---|---|---|---|---|---|---|
| | | D | 1 | 2 | 3 | 4 | 5 | 6 | 7 | 8 | 9 |
| 0 | 5 ms | D | S | U | U | U | D | S | U | U | U |
| 1 | 5 ms | D | S | U | U | D | D | S | U | U | D |
| 2 | 5 ms | D | S | U | D | D | D | S | U | D | D |
| 3 | 10 ms | D | S | U | U | U | D | D | D | D | D |
| 4 | 10 ms | D | S | U | U | D | D | D | D | D | D |
| 5 | 10 ms | D | S | U | D | D | D | D | D | D | D |
| 6 | 5 ms | D | S | U | U | U | D | S | U | U | D |

| | | | | | | | | | | | |
|---|---|---|---|---|---|---|---|---|---|---|---|
| * D denotes a downlink subframe, U denotes an uplink subframe, and S denotes a special subframe. | | | | | | | | | | | |

The structure of the radio frame is only exemplary. Accordingly, the number of subframes included in the radio frame, the number of slots included in the subframe or the number of symbols included in the slot may be changed in various manners.

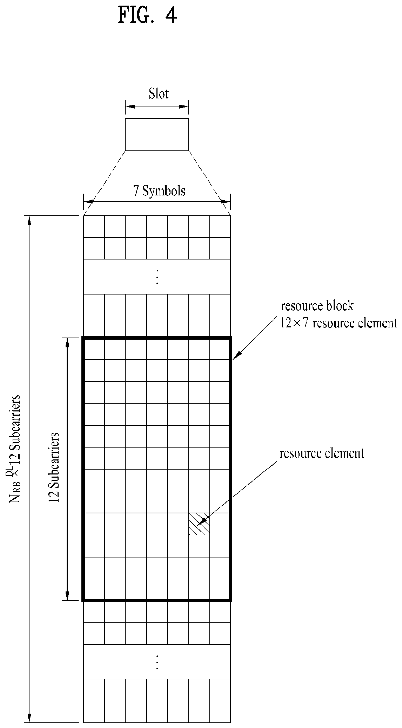

FIG. 4 is a diagram showing a resource grid of a downlink slot.

Referring to FIG. 4, a downlink slot includes a plurality of OFDM symbols in a time domain. One downlink slot may include seven (six) OFDM symbols and one RB may include 12 subcarriers in a frequency domain. Each element on the resource grid is referred to as a resource element (RE). One RB includes 12×7(6) REs. The number N_{RB} of RBs included in a downlink slot depends on a downlink transmission bandwidth. The structure of the uplink slot may be equal to the structure of the downlink slot, except that an OFDM symbol is replaced with an SC-FDMA symbol.

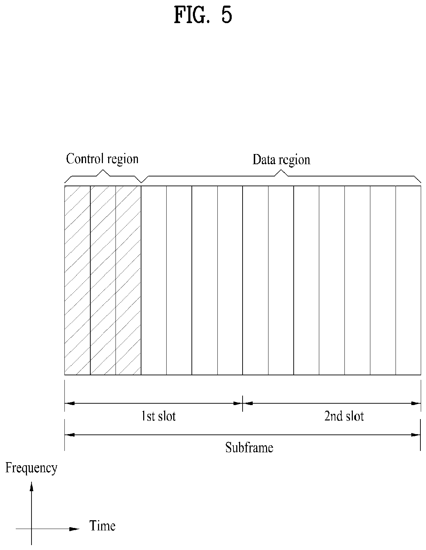

FIG. 5 is a diagram showing the structure of a downlink subframe.

Referring to FIG. 5, a maximum of three (four) OFDM symbols of a front portion of a first slot within one subframe corresponds to a control region to which a control channel is allocated. The remaining OFDM symbols correspond to a data region to which a Physical Downlink Shared Channel (PDSCH) is allocated. Examples of the downlink control channels used in LTE include, for example, a Physical Control Format Indicator Channel (PCFICH), a Physical Downlink Control Channel (PDCCH), a Physical Hybrid automatic repeat request Indicator Channel (PHICH), etc. The PCFICH is transmitted at a first OFDM symbol of a subframe, and carries information about the number of OFDM symbols used to transmit the control channel within the subframe. The PHICH carries a HARQ ACK/NACK signal in response to uplink transmission.

The control information transmitted through the PDCCH is referred to as Downlink Control Information (DCI). The DCI includes resource allocation information and other control information for a UE or a UE group. For example, the DCI includes uplink or downlink scheduling information, an uplink transmit (Tx) power control command, etc.

The PDCCH may carry transmission format and resource allocation information of a Downlink Shared Channel (DL-SCH), transmission format and resource allocation information of an Uplink Shared Channel (UL-SCH), paging information on a Paging Channel (PCH), system information on the DL-SCH, resource allocation of a higher layer control message such as a Random Access Response (RAR) transmitted on the PDSCH, a set of transmit (Tx) power control commands for individual UEs within a UE group, a Tx power control command, information indicating activation of Voice over IP (VoIP), etc. A plurality of PDCCHs may be transmitted within the control region. The UE may monitor the plurality of PDCCHs. The PDCCHs are transmitted as an aggregate of one or several consecutive control channel elements (CCEs). The CCE is a logical allocation unit used to provide the PDCCHs with a coding rate based on the state of a radio channel. The CCE corresponds to a plurality of resource element groups (REGs). The format of the PDCCH and the number of available bits are determined based on the number of CCEs. The eNB determines a PDCCH format according to a DCI to be transmitted to the UE, and attaches a Cyclic Redundancy Check (CRC) to control information. The CRC is masked with a Radio Network Temporary Identifier (RNTI) according to an owner or usage of the PDCCH. If the PDCCH is for a specific UE, a cell-RNTI (C-RNTI) of the UE may be masked to the CRC. Alternatively, if the PDCCH is for a paging message, a paging indicator identifier (P-RNTI) may be masked to the CRC. If the PDCCH is for system information (more specifically, a system information block (SIB)), a system information RNTI (SI-RNTI) may be masked to the CRC. If the PDCCH is for random access response, a random access-RNTI (RA-RNTI) may be masked to the CRC.

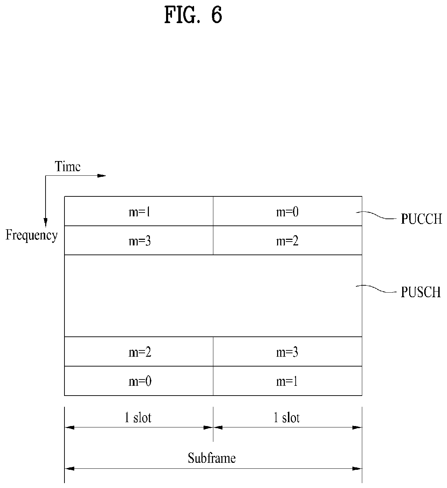

FIG. 6 is a diagram showing the structure of an uplink subframe used in LTE.

Referring to FIG. 6, the uplink subframe includes a plurality (e.g., 2) of slots. The slot may include SC-FDMA symbols, the number of which is changed according to CP length. The uplink subframe may be divided into a control region and a data region in a frequency domain. The data region includes a PUSCH and is used to transmit a data signal such as voice. The control region includes a PUCCH and is used to transmit uplink control information (UCI). The PUCCH includes an RB pair located at both ends of the data region on a frequency axis and is hopped at a slot boundary.

The PUCCH may be used to transmit the following control information.
- Scheduling request (SR): Information used to request uplink (UL)-SCH resources. This is transmitted using an on-off keying (OOK) method.
- HARQ ACK/NACK: Response signal to downlink data packets on a PDSCH. This indicates whether downlink data packets are successfully received. 1-bit ACK/NACK is transmitted in response to a single downlink codeword and 2-bit ACK/NACK is transmitted in response to two downlink codewords.
- Channel quality indicator (CQI): Feedback information for a downlink channel. Multiple input multiple output (MIMO)-related feedback information includes a rank indicator (RI) and a precoding matrix indicator (PMI). 20 bits are used per subframe.

The amount of control information (UCI) transmittable by a UE in a subframe depends on the number of SC-FDMA symbols available in control information transmission. The SC-FDMA symbols available in control information transmission mean SC-FDMA symbols excluding SC-FDMA symbols for reference signal transmission in a subframe, and a last SC-FDMA symbol of the subframe is also excluded in case of a subframe in which a sounding reference signal (SRS) is set. A reference signal is used for coherent detection of a PUCCH. The PUCCH supports 7 formats according to transmitted information.

Table 2 shows a mapping relationship between a PUCCH format and UCI in LTE.

**Table 2**

| PUCCH Format | Uplink Control Information (UCI) |
|---|---|
| Format 1 | Scheduling request (SR) (unmodulated waveform) |
| Format 1a | 1-bit HARQ ACK/NACK with/without SR |
| Format 1b | 2-bit HARQ ACK/NACK with/without SR |
| Format 2 | CQI (20 coded bits) |
| Format 2 | CSI and 1- or 2-bit HARQ ACK/NACK (20 bits) for extended CP only |
| Format 2a | CQI and 1-bit HARQ ACK/NACK (20 + 1 coded bits) |
| Format 2b | CQI and 2-bit HARQ ACK/NACK (20 + 2 coded bits) |

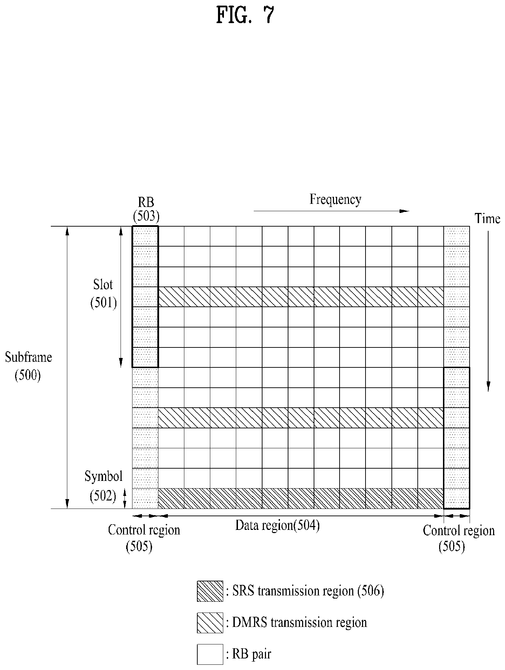

FIG. 7 is a diagram showing the structure of an uplink subframe in detail.

Referring to FIG. 7, a subframe 500 having a length of 1 ms which is a basic unit of LTE uplink transmission includes two slot 501 each having a length of 0.5 ms. In the case of a length of a normal Cyclic Prefix (CP), each slot includes seven symbols 502 and one symbol corresponds to one single carrier-frequency division multiple access (SC-FDMA) symbol. An RB 503 is a resource allocation unit corresponding to 12 subcarriers in a frequency domain and one slot in a time domain. The structure of the uplink subframe of LTE is roughly divided into a data region 504 and a control region 505. The data region refers to communication resources used for data transmission, such as voice or packets transmitted to each UE, and includes a physical uplink shared channel (PUSCH). The control region refers to communication resources used to transmit an uplink control signal such as a downlink channel quality report from each UE, reception ACK/NACK of a downlink signal, an uplink scheduling request, etc., and includes a Physical Uplink Control Channel (PUCCH). A sounding reference signal (SRS) is transmitted through a last SC-FDMA symbol of one subframe on a time axis. SRSs of several UEs transmitted through the last SC-FDMA of the same subframe are distinguished according to a frequency position/sequence.

In the existing 3GPP Rel-9 (LTE), an SRS is only periodically transmitted. A configuration for periodic transmission of an SRS is configured by a cell-specific SRS parameter and a UE-specific SRS parameter. The cell-specific SRS parameter (a cell-specific SRS configuration) and the UE-specific SRS parameter (a UE-specific SRS configuration) are transmitted to a UE through higher layer (e.g., RRC) signaling.

The cell-specific SRS parameter includes srs-BandwidthConfig and srs-SubframeConfig. srs-BandwidthConfig indicates information about a frequency bandwidth in which an SRS may be transmitted and srs-SubframeConfig indicates information about a subframe in which an SRS may be transmitted. A subframe in which an SRS may be transmitted within a cell is periodically set in a frame. Table 3 shows srs-SubframeConfig in the cell-specific SRS parameter.

**Table 3**

| *srs*-*SubframeConfig* | Binary | Configuration Period *T*_{SFC} (subframes) | Transmission offset Δ_{SFC} (subframes) |
|---|---|---|---|
| 0 | 0000 | 1 | {0} |
| 1 | 0001 | 2 | {0} |
| 2 | 0010 | 2 | {1} |
| 3 | 0011 | 5 | {0} |
| 4 | 0100 | 5 | {1} |
| 5 | 0101 | 5 | {2} |
| 6 | 0110 | 5 | {3} |
| 7 | 0111 | 5 | {0,1} |
| 8 | 1000 | 5 | {2,3} |
| 9 | 1001 | 10 | {0} |
| 10 | 1010 | 10 | {1} |
| 11 | 1011 | 10 | {2} |
| 12 | 1100 | 10 | {3} |
| 13 | 1101 | 10 | {0,1,2,3,4,6,8} |
| 14 | 1110 | 10 | {0,1,2,3,4,5,6,8} |
| 15 | 1111 | reserved | Reserved |

T_{SFC} denotes a cell-specific subframe configuration and Δ_{SFC} denotes a cell-specific subframe offset. srs-SubframeConfig is provided by a higher layer (e.g., an RRC layer). An SRS is transmitted through a subframe satisfying floor(nₛ/2)modT_{SFC}∈Δ_{SFC}. Nₛ denotes a slot index. floor() is a flooring function and mod denotes a modulo operation.

The UE-specific SRS parameter includes srs-Bandwidth, srs-HoppingBandwidth, freqDomainPosition, srs-ConfigIndex, transmissionComb and cyclicShift. srs-Bandwidth indicates a value used to set a frequency bandwidth in which a UE should transmit an SRS. srs-HoppingBandwidth indicates a value used to set frequency hopping of an SRS. freqDomainPosition indicates a value used to determine a frequency position where an SRS is transmitted. srs-ConfigIndex indicates a value used to set a subframe in which a UE should transmit an SRS. transmissionComb indicates a value used to set an SRS transmission Comb. cyclicShift indicates a valued used to set a cyclic shift value applied to an SRS sequence.

Tables 4 and 4 show SRS periodicity and a subframe offset according to srs-ConfigIndex. The SRS transmission periodicity indicates a time interval (unit: subframe or ms) in which a UE should periodically transmit an SRS. Table 4 shows an FDD case and Table 5 shows a TDD case. The SRS configuration index I_{SRS} is signaled per UE and each UE confirms the SRS transmission periodicity T_{SRS} and the SRS subframe offset T_{offset} using the SRS configuration index I_{SRS}.

**Table 4**

| SRS Configuration Index I_{SRS} | SRS Periodicity *^{T}*_{SRS} (ms) | SRS Subframe Offset *^{T}_{offset}* |
|---|---|---|
| 0 - 1 | 2 | I_{SRS} |
| 2 - 6 | 5 | I_{SRS} - 2 |
| 7 - 16 | 10 | I_{SRS} - 7 |
| 17 - 36 | 20 | I_{SRS} - 17 |
| 37 - 76 | 40 | I_{SRS} - 37 |
| 77 - 156 | 80 | I_{SRS} - 77 |
| 157 - 316 | 160 | I_{SRS} - 157 |
| 317 - 636 | 320 | I_{SRS} - 317 |
| 637 - 1023 | reserved | reserved |

**Table 5**

| Configuration Index I_{SRS} | SRS Periodicity *T*_{SRS} (ms) | SRS Subframe Offset *T_{offset}* |
|---|---|---|
| 0 | 2 | 0,1 |
| 1 | 2 | 0,2 |
| 2 | 2 | 1,2 |
| 3 | 2 | 0,3 |
| 4 | 2 | 1,3 |
| 5 | 2 | 0,4 |
| 6 | 2 | 1,4 |
| 7 | 2 | 2,3 |
| 8 | 2 | 2,4 |
| 9 | 2 | 3,4 |
| 10 - 14 | 5 | I_{SRS} - 10 |
| 15 - 24 | 10 | I_{SRS} - 15 |
| 25 - 44 | 20 | I_{SRS} - 25 |
| 45 - 84 | 40 | I_{SRS} - 45 |
| 85 - 164 | 80 | I_{SRS} - 85 |
| 165 - 324 | 160 | I_{SRS} - 165 |
| 325 - 644 | 320 | I_{SRS} - 325 |
| 645 - 1023 | reserved | reserved |

In summary, in the 3GPP Rel-9 (LTE), the cell-specific SRS parameter indicates subframes occupied for SRS transmission within a cell to a UE and the UE-specific SRS parameter indicates subframes, which will actually be used by the UE, among the subframes occupied for SRS transmission. The UE periodically transmits an SRS through a specific symbol (e.g., a last symbol) of the subframe specified as the UE-specific SRS parameter.

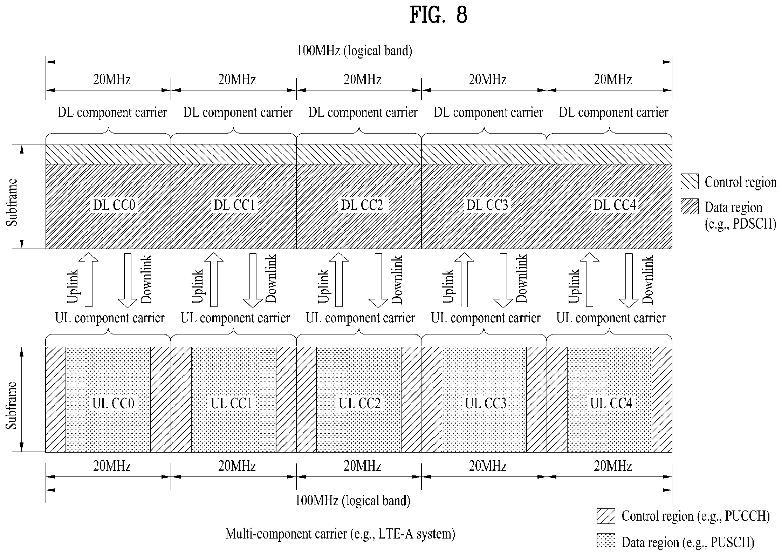

FIG. 8 is a diagram showing a carrier aggregation (CA) communication system. An LTE-A system uses carrier aggregation or bandwidth aggregation technology to aggregate a plurality of uplink/downlink frequency blocks to use a larger uplink/downlink bandwidth in order to use a wider frequency bandwidth. Each frequency block is transmitted using a component carrier (CC). The component carrier may be understood as a carrier frequency (or a center carrier or a center frequency) for a frequency block.

Referring to FIG. 8, a plurality of uplink/downlink component carriers (CCs) may be aggregated to support a wider uplink/downlink bandwidth. CCs may or may not be adjacent to each other in a frequency domain. The bandwidth of each CC may be independently set. Asymmetric carrier aggregation in which the number of UL CCs and the number of DL CCs are different is possible. For example, if the number of DL CCs is 2 and the number of UL CCs is 1, the DL CCs may correspond to the UL CC 2:1. The DL CC/UL CC link may be fixed or semi-static. In addition, although an overall system bandwidth includes N CCs, a frequency bandwidth monitored/received by a specific UE may be restricted to M (<N) CCs. Various parameters of carrier aggregation may be set in a cell-specific, UE group-specific or UE-specific manner. Control information may be set to be transmitted and received only via a specific CC. Such a specific CC may be referred to as a primary CC (PCC) and the remaining CCs may be referred to as secondary CCs (SCCs).

LTE-A uses the concept of a cell in order to manage radio resources. The cell is defined as a combination of downlink resources and uplink resources, and the uplink resources are not mandatory. Accordingly, the cell may be composed of downlink resources alone or both downlink resources and uplink resources. If carrier aggregation is supported, linkage between a carrier frequency (or a DL CC) of downlink resources and a carrier frequency (or a UL CC) of uplink resources may be indicated by system information. A cell operating on a primary frequency (e.g., a primary CC (PCC)) may be referred to as a PCell and a cell operating on a secondary frequency (e.g., a secondary CC (SCC)) may be referred to as an SCell. The PCell is used for a UE to perform an initial connection establishment process or a connection re-establishment process. The PCell may indicate a cell indicated in a handover procedure. The SCell may be configured after RRC connection establishment and may be used to provide additional radio resources. The PCell and the SCell may be collectively referred to as a serving cell. In case of a UE which is in an RRC_CONNECTED state but does not establish or support carrier aggregation, only one serving cell including the PCell exists. In case of a UE which is in an RRC_CONNECTED state and establishes carrier aggregation, one or more serving cells exist and the serving cells include the PCell and all SCells. For carrier aggregation, a network may be added to the PCell initially configured in a connection establishment process and one or more SCells may be configured for a UE supporting carrier aggregation, after an initial security activation process is initiated.

If cross-carrier scheduling (or cross-CC scheduling) is applied, a PDCCH for downlink allocation is transmitted at DL CC #0 and a PDSCH corresponding thereto is transmitted at DL CC #2. For cross-CC scheduling, a carrier indicator field (CIF) may be introduced. Presence/absence of a CIF within a PDCCH may be set by higher layer signaling (e.g., RRC signaling) in a semi-static and UE-specific (or UE group-specific) manner. A baseline of PDCCH transmission will be summarized as follows.
- CIF disabled: A PDCCH on a DL CC allocates PDSCH resources on the same DL CC or PUSCH resources on a single linked UL CC.
- CIF enabled: A PDCCH on a DL CC may allocate PDSCH or PUSCH resources on a specific DL/UL CC among a plurality of aggregated DL/UL CCs using a CIF.

If the CIF is present, an eNB may allocate a PDCCH monitoring DL CC set in order to reduce BD complexity of a UE. The PDCCH monitoring DL CC set is a part of all aggregated DL CCs and includes one or more DL CCs. A UE performs PDCCH detection/decoding only on the DL CC. That is, if an eNB schedules a PDSCH/PUSCH to a UE, the PDCCH is transmitted only via a PDCCH monitoring DL CC set. The PDCCH monitoring DL CC set may be set in a UE-specific, UE group-specific or cell-specific manner. The term "PDCCH monitoring DL CC" may be replaced with the term "monitoring carrier" or "monitoring cell". In addition, the term "CCs aggregated for a UE" may be replaced with the term "serving CC", "serving carrier" or "serving cell".

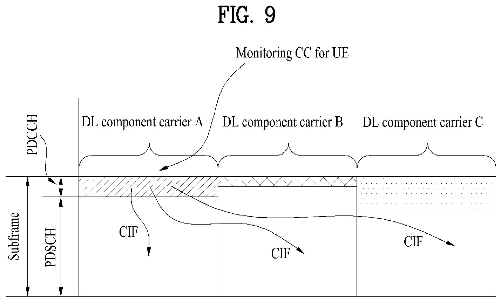

FIG. 9 shows scheduling if a plurality of carriers is aggregated. Assume that three DL CCs are aggregated. Assume that a DL CC A is set to a PDCCH monitoring DL CC. DL CCs A to C may be referred to as serving CCs, serving carriers or service cells. If a CIF is disabled, each DL CC may transmit only a PDCCH scheduling a PDSCH thereof without the CIF according to an LTE PDCCH rule. In contrast, a CIF is enabled by UE-specific (or UE group-specific or cell-specific) higher layer signaling, the DL CC A (monitoring DL CC) may transmit not only a PDCCH scheduling a PDCCH of the DL CC A but also a PDCCH scheduling a PDSCH of another CC, using the CIF. In this case, the PDCCH is not transmitted in the DL CC B/C.

In a conventional TDD system, since all cells use the same UL-DL configuration, the cells perform downlink transmission or uplink transmission at a specific time. In an evolved system such as LTE-A, a UL-DL configuration is independently set per cell. In this case, inter-cell interference becomes severe due to a heterogeneous UL-DL configuration.

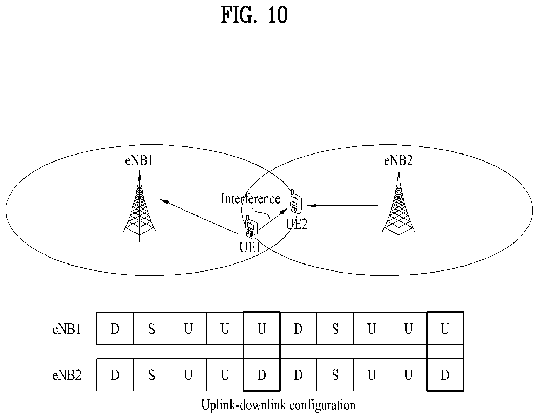

FIG. 10 shows inter-cell interference due to a heterogeneous UL-DL configuration in a TDD system. Assume that UE1 is included in an eNB1 cell and UE2 is included in an eNB2 cell. D denotes a downlink subframe, U denotes an uplink subframe and S denotes a special subframe.

Referring to FIG. 10, since UL-DL configurations of two neighboring cells are different, the two cells perform different transmissions in fifth and eleventh subframes. That is, UL transmission may be performed in the eNB1 cell (e.g., UE=>eNB1) and DL transmission may be performed in the eNB2 cell (e.g., eNB1=>UE1). In this case, the UE (e.g., UE2), which receives a DL signal, among UEs located at a common part of the two cells may experience strong interference by the UE (e.g., UE1) which performs UL transmission. Therefore, a probability that DL transmission of eNB2 fails may be increased. Here, the common part (or cell edge) of the two cells may mean a region influenced by transmission of the neighboring cell. The cell edge region may be determined based on reference signal received power (RSRP)/reference signal received quality (RSRQ). In addition, the cell edge UE may be significantly influenced by transmission of the neighboring cell.

FIG. 10 shows inter-cell interference if plural eNBs have different UL-DL configurations in case of a single carrier. Unlike the example of FIG. 10, inter-cell interference due to heterogeneous UL-DL configurations may occur among a plurality of carriers. For example, if a plurality of carriers is configured in one eNB and a UL-DL configuration is independently set per carrier, interference similar to FIG. 10 occurs.

Hereinafter, the present invention proposes a method of reducing interference which may occur if a DL resource region (e.g., a DL subframe) and a UL resource region (e.g., a UL subframe) coexist between different cells (e.g., eNBs or carriers).

The present invention may be used to reduce interference which may occur if a region which is used as DL resources in one cell is used as UL resources in another cell. In addition, the present invention is applicable to the case in which DL transmission of one carrier causes interference of UL transmission of another carrier (or UL transmission of one carrier serves as interference of DL transmission of another carrier) in a carrier aggregation system. In addition, the present invention is applicable to interference which may occur if UL resources (or DL resources) of a specific cell or carrier are changed to be used for DL transmission (or UL transmission) while plural cells or plural carriers use the same UL/DL configuration. More specifically, the present invention can reduce inter-cell interference which occurs if a frame structure type 2 (TDD system) of an LTE-A system is used and UL-DL configurations of neighboring cells are different.

Hereinafter, a method of solving inter-cell interference according to the present invention will be described in detail. Here, although a DL subframe is set to be used for UL transmission according to a UL-DL configuration (Table 1), a subframe changed to be used for DL transmission by scheduling or higher layer signaling is included.

In the following description, a cell is defined as a combination of downlink resources and uplink resources, and the uplink resources are not mandatory. Accordingly, the cell may be composed of downlink resources alone or both downlink resources and uplink resources. If resources are defined from the viewpoint of carrier, an eNB includes one cell in a single carrier system. In contrast, an eNB includes a plurality of cells in a multi-carrier system and one cell corresponds to one carrier. In the single carrier system, the terms cell and eNB have the same meaning and are used interchangeably. In addition, a cell performing operation means that an eNB performs operation in association with the cell. In addition, inter-cell signaling may be performed via an inter-eNB interface (e.g., an X2 interface) or an intra-eNB interface.

To aid in understanding of the present invention, although interference control between two cells is focused upon in the following description, the present invention is similarly applicable to the case in which interference among three or more cells is controlled. In addition, if two cells are present, one cell may be referred to as a source cell (or a transmission cell or a serving cell) and another cell may be referred to as a reception cell (or a cooperative cell, a neighboring cell, or a peripheral cell) in terms of signaling.

### Embodiment 1-1: Inter-cell interference solution due to UL transmission

In the present embodiment, neighboring cells may mutually exchange UL-DL configurations and at least one cell may not perform scheduling with respect to a specific UE (e.g., a cell edge UE) in a subframe (hereinafter, referred to as a U/D subframe) in which UL transmission and DL transmission collide. For example, the cell may not perform UL scheduling with respect to a specific UE (e.g., a cell edge UE) in a subframe in which UL transmission thereof and DL transmission of a neighboring cell collide. In contrast, the cell may not perform DL scheduling with respect to a specific UE (e.g., a cell edge UE) in a subframe in which DL transmission thereof and UL transmission of a neighboring cell collide. The UL-DL configurations may be exchanged via an X2 interface. The UL-DL configurations may be exchanged using indices indicating the UL-DL configurations of Table 1 or a bitmap corresponding to the UL-DL configurations. The bitmap information may be repeated at fixed periodicity.

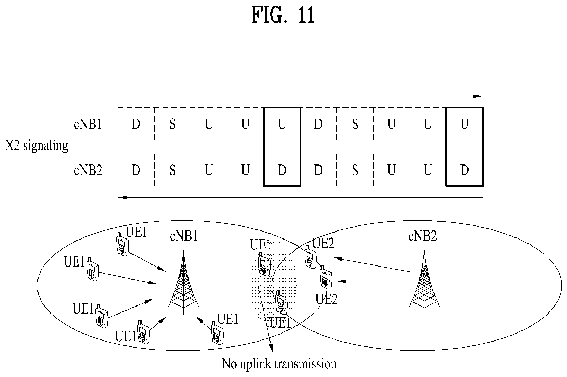

FIG. 11 shows a method of solving inter-cell interference according to Embodiment 1-1. The present embodiment may be understood as inter-cell interference of a single carrier system or inter-cell interference for a specific carrier in a multi-carrier system. Referring to FIG. 11, eNB1 and eNB2 mutually exchange UL-DL configurations. The UL-DL configurations may be exchanged via X2 signaling and X2 signaling may include indices indicating UL-DL configurations or bitmap information indicating UL-DL configurations. The bitmap information may be repeated at fixed periodicity. By exchanging the UL-DL configurations, eNB1 and eNB2 may recognize a subframe (that is, a U/D subframe) in which a transmission direction between cells is wrong. Accordingly, eNB1 may not schedule UL transmission with respect to a cell edge UE or restrict scheduling in the U/D subframe. In contrast, although not shown, eNB2 may not schedule DL transmission with respect to a cell edge UE or restrict scheduling in the U/D subframe.

### Embodiment 1-2: Inter-cell interference solution due to UL transmission

In the present embodiment, an eNB (for convenience, eNB A) may signal a set of some subframes (for convenience, UL subset_type 1) among subframes to be transmitted in uplink to an eNB (for convenience, an eNB B) of a neighboring cell within a cell thereof. Information about UL subset_type 1 may be mutually exchanged between eNBs or may be unidirectionally transmitted from one eNB to another eNB. Here, UL subset_type 1 may mean a subframe set in which UL scheduling is not performed or is restricted in the cell of the eNB A. For example, UL subframe_type 1 may mean a subframe set in which UL scheduling is not performed with respect to a specific UE (e.g., a cell edge UE) in the cell of the eNB A. In addition, UL subset_type 1 may be interpreted as a subframe set in which UL transmission activity is restricted/reduced, a subframe set having low UL interference, etc.

Accordingly, the eNB (that is, the eNB B) of the neighboring cell receives signaling for UL subset_type 1 and then schedules DL transmission with respect to a cell edge UE with the neighboring cell in a DL subframe aligned with UL subset_type 1 to perform DL transmission with relatively low interference. For example, in FIG. 11, eNB1 may signal, to eNB 1, information indicating an eleventh subframe between fifth and eleventh subframes corresponding to UL transmission. In the signaling, the eleventh subframe may be interpreted as a subframe in which UL interference is reduced (e.g., a subframe in which UL scheduling is not performed or restricted with respect to a cell edge UE). Accordingly, eNB2 may schedule DL transmission with respect to the cell edge UE in the eleventh subframe. In contrast, eNB2 may restrict or prohibit DL scheduling with respect to the cell edge UE in the fifth subframe. As a result, signaling indicating interference characteristics of the UL subframe from the viewpoint of eNB1 is applied to a DL subframe from the viewpoint of eNB2.

Here, UL subframe_type 1 may be indicated using a bitmap corresponding to a plurality of subframes and a bit value corresponding to a UL subframe belonging to UL subset_type 1 in the bitmap may be set to a specific value (e.g., 0 or 1). A bitmap size may correspond to one or a plurality of radio frames. The bitmap information may be repeated at fixed periodicity. In addition, UL subset_type 1 may be indicated using a reduced bitmap only corresponding to a UL subframe and a bit value corresponding to a UL subframe belonging to UL subset_type 1 in the bitmap may be set to a specific value (e.g., 0 or 1). If the reduced bitmap is used, the cell may additionally signal information about the UL-DL configurations to peripheral cells.

### Embodiment 1-3: Inter-cell interference solution due to UL transmission

In the present embodiment, an eNB (for convenience, eNB A) may signal a set of some subframes (for convenience, DL subset_type 1) among subframes to be transmitted in downlink to an eNB (for convenience, an eNB B) of a neighboring cell within a cell thereof. Information about DL subset_type 1 may be mutually exchanged between eNBs or may be unidirectionally transmitted from one eNB to another eNB. Here, DL subset_type 1 may mean a subframe set in which DL transmissions are intensively performed with respect to a specific UE (e.g., a cell edge UE) in the cell of the eNB A. For example, DL subframe_type 1 may be interpreted as a subframe set with high DL interference. In addition, signaling of DL subset_type 1 may be interpreted as signaling for, at the eNB A, requesting reduction of interference due to UL transmission in a specific subframe from the eNB B. In the present embodiment, the eNB (that is, eNB B) of the neighboring cell receives the signaling for DL subset_type 1 and then reduces UL transmission to the cell edge UE in a UL subframe aligned with DL subset_type 1 (e.g., does not perform UL scheduling or restricts UL scheduling) so as to reduce inter-cell interference.

DL subframe_type 1 may be indicated using a bitmap corresponding to a plurality of subframes and a bit value corresponding to a DL subframe belonging to DL subset_type 1 in the bitmap may be set to a specific value (e.g., 0 or 1). A bitmap size may correspond to one or a plurality of radio frames. The bitmap information may be repeated at fixed periodicity. In addition, DL subset_type 1 may be indicated using a reduced bitmap only corresponding to a DL subframe and a bit value corresponding to a DL subframe belonging to DL subset_type 1 in the bitmap may be set to a specific value (e.g., 0 or 1). If the reduced bitmap is used, the cell may additionally signal information about the UL-DL configurations to peripheral cells.

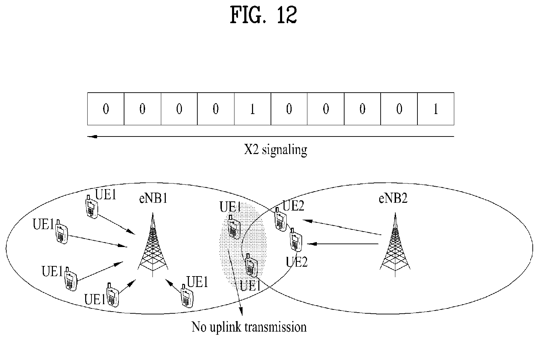

FIG. 12 shows a method of solving interference according Embodiment 1-3. The present embodiment may be understood as inter-cell interference of a single carrier system or inter-cell interference for a specific carrier in a multi-carrier system.

Referring to FIG. 12, eNB2 transmits bitmap information indicating a DL subset to eNB 1. In the bitmap, the location of each bit corresponds to each subframe in a radio frame and DL subset_type 1 includes a subframe corresponding to a bit having a value of 1. Accordingly, in the present embodiment, eNB2 requests reduction of interference due to UL transmission of a cell edge UE in fifth and eleventh subframes from eNB1.

In the present embodiment, signaling indicating interference characteristics (overload) of the DL subframe from the viewpoint of eNB2 is applied to a UL subframe from the viewpoint of eNB 1.

### Embodiment 1-4: Inter-cell interference solution due to UL transmission

In the present embodiment, an eNB (for convenience, eNB A) may signal an almost blank subframe (ABS) pattern thereof to an eNB (for convenience, an eNB B) of a neighboring cell (or eNBs of a neighboring cell) within a cell thereof. The ABS may mean a DL subframe for transmitting only some signals (e.g., CRS) or a DL subframe with reduced transmit power or load. The ABS pattern is repeated with a period of 40 ms (that is, 40 subframes) and is indicated using a bitmap having a size of 40 bits. In the present embodiment, the eNB (that is, the eNB B), which receives the ABS pattern, may schedule DL transmission in a subframe aligned with the ABS. In addition, the eNB B may schedule DL transmission in a subframe aligned with a UL subframe corresponding to the ABS in a HARQ process.

In addition, a UL/DL configuration may be (dynamically) set according to a cell situation. The UL/DL configuration may be signaled in the following cases. The UL/DL configuration may be changed in U/D subframe units.
1. In a DL subframe set to an ABS by eNB1 and a UL subframe corresponding to the ABS in a HARQ process, eNB2 may dynamically change the UL/DL configuration of the corresponding subframe without considering interference to eNB1 (or interference from eNB1).
2. If more UL resources than UL (or DL) resources defined in a predetermined UL-DL configuration (see Table 1) are necessary, the eNB may dynamically change the UL/DL configuration.

### Embodiment 1-5: Inter-cell interference solution due to UL transmission

In a TDD system, an ABS pattern is transmitted in the form of a bitmap indicating a subframe set to an ABS in all subframes composed of DL and UL subfrrames. In existing operation, since an ABS pattern is exchanged so as to coordinate DL interference, ABS settings have a valid meaning only with respect to a bit corresponding to a DL subframe in the bitmap indicating the ABS pattern. Accordingly, a bit corresponding to a UL subframe is always filled with 0 in the bitmap for the ABS pattern.

The present embodiment proposes extension of a conventional ABS pattern to a UL subframe. More specifically, in the present embodiment, a subframe corresponding to a UL subframe is set to an ABS in a bitmap for an ABS pattern. For convenience, a conventional ABS pattern is referred to as a DL ABS pattern and an ABS pattern according to the present embodiment is referred to as an improved ABS pattern. That is, the improved ABS pattern corresponds to the case in which some of the bits corresponding to a UL subframe in a bitmap for a conventional ABS pattern are further set to an ABS.

If UL-DL configurations are exchanged between cells, a cell (for convenience, a reception cell) which has received an improved ABS pattern from a neighboring cell (for convenience, a source cell) may distinguish between a conventional DL ABS pattern and a UL subframe set (for convenience, a UL AB S pattern) set to an ABS according to the present embodiment. If UL-DL configurations are exchanged between cells, a cell which has received an improved ABS pattern from a neighboring cell may be unable to determine whether a subframe set to an ABS is a DL subframe or a UL subframe. In either case, the reception cell may determine that the source cell prepares for DL transmission thereof in a corresponding subframe even when the subframe set to the ABS is a UL subframe in the source cell and/or the reception cell. For example, if a UL subframe is present in subframes set to the ABS, the reception cell may interpret the source cell as performing interference control (e.g., UL transmission restriction, UL scheduling prohibition) in the UL subframe. Accordingly, the reception cell may change the UL/DL configuration in the UL subframe set to the ABS or perform DL transmission in the corresponding UL subframe.

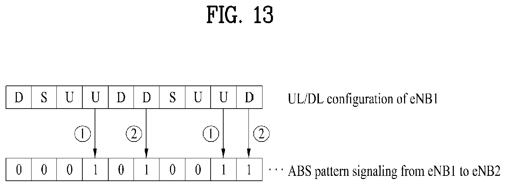

FIG. 13 shows interference control using an improved ABS pattern. In the present embodiment, assume that UL-DL configurations are exchanged between cells.

Referring to FIG. 13, eNB1 may signal a shown ABS pattern to eNB2. In this case, eNB2 may operate as follows in consideration of the ABS pattern. First, eNB2 may perform UL/DL configuration change in a DL subframe thereof aligned with a DL subframe ○ ,2 in the ABS pattern. For example, eNB2 may perform operation for controlling interference due to a DL signal (e.g., a CRS) of eNB1 and DL scheduling, on the assumption that only a restricted signal (e.g., a CRS) of eNB1 is transmitted on the DL subframe ○ ,2 (that is, existing eICIC operation may be performed). Next, eNB2 may freely change the UL/DL configuration in a subframe thereof aligned with a UL subframe ○ ,1 in the ABS pattern. That is, in the improved ABS pattern method of the present embodiment, in a TDD system, for UL/DL change coordination, a serving cell may set a UL subframe to an ABS and a neighboring cell may (dynamically) change the UL/DL configurations in the subframe (or the UL/DL configurations may be dynamically changed in the subframes corresponding to ○ ,1 and ○ ,2).

As described above, if UL transmission and DL transmission are dynamically changed in a specific subframe using a UL ABS, for more efficient inter-cell coordination, a response message to an ABS pattern is transmitted from the neighboring cell to the source cell. More specifically, the neighboring cell, which has received the ABS pattern from the source cell, may transmit the response message including the ABS state to the source cell. Here, the source cell may be interpreted as eNB1 of FIG. 10 and the neighboring cell may be interpreted as eNB2 of FIG. 10. The response message may include the following.
1. Subframe set, which may not be used in the reception cell, among ABSs
   A. The reception cell may inform the source cell of subframes in which sufficiently low interference is not maintained due to inappropriate interference coordination although the subframes are set as the ABSs by the source cell. Therefore, the source cell may cancel the ABS operation of the subframe and prevent unnecessary resource waste within the source cell.
2. Ratio of subframes actually used by the reception cell to all ABSs (or available subframes of all ABSs
   A. The source cell sets resources required by the reception cell to ABSs to prevent the source cell from unnecessarily setting a large amount of resources to ABSs.

According to implementations, only one of the above-described two signals or a combination thereof may be used. According to the present embodiment, the reception cell performs DL transmission not only in a DL ABS but also in a UL ABS and the DL ABS and the UL ABS differ in terms of function. That is, the reception cell may predict that interference due to DL transmission of the source cell is low in the DL ABS and interference due to UL transmission of the source cell UE is low in the UL ABS. Accordingly, the response message for the ABS state proposed by the present invention may be transmitted in a state in which the response information is divided with respect to the DL ABS and the UL ABS. In this case, since the source cell independently receives information about each of the DL ABS and the UL ABS, the number or pattern of subframes allocated to the DL ABS/UL ABS may be appropriately controlled according to the reception cell conditions.

Such operation is equally applicable to Embodiment 1-2 and Embodiment 1-3 in addition to UL/DL ABS. For example, in Embodiment 1-2, the source cell may signal, to the reception cell, a subframe set which will not schedule UL transmission with respect to a cell edge UE. In this case, the reception cell may signal, to the source cell, a ratio of subframes actually used for DL transmission to subframes which will not schedule DL transmission with respect to a cell edge UE and subframes available for DL transmission of the cell edge UE in the subframe set. Therefore, the source cell may prevent unnecessary resource waste in resource use of the cell edge UE.

In addition, in Embodiment 1-3, the source cell may signal, to the reception cell, a subframe set which will schedule DL transmission with respect to a cell edge UE. Such signaling may be interpreted as signaling for, at a source cell, requesting reduction of UL transmission of the cell edge UE from the reception cell. If the reception cell schedules UL transmission with respect to the cell edge UE even when the reception cell receives the request, DL transmission of the source cell may not be normally performed due to interference due to UL transmission. In order to solve such a problem, the reception cell may transmit, to the source cell, subframes in which UL transmission cannot be reduced, in the subframe set as a response. At this time, the source cell which receives the response may not schedule DL transmission of the cell edge UE in those subframes or re-request reduction of UL transmission of the cell edge UE from the reception cell. Accordingly, it is possible to prevent performance reduction due to UL/DL collision.

### Embodiment 2: Inter-cell interference solution due to DL transmission

Although the inter-cell interference solution when UL transmission of one cell serves as interference in DL transmission of another cell was described, the present invention is applicable to the case in which DL transmission of one cell serves as interference in UL transmission of another cell.

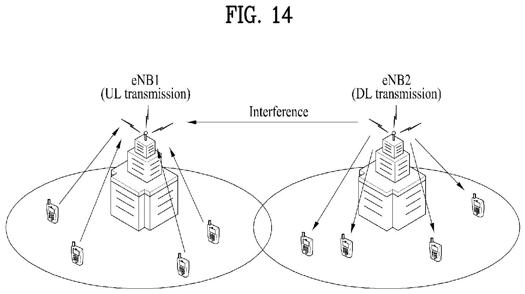

FIG. 14 shows the case in which eNBs are mounted on buildings and thus a line of sight (LOS) between eNBs is established, causing interference. In this case, DL transmission of one cell may serve as interference in UL transmission of another cell.

Referring to FIG. 14, UL transmission of an eNB1 cell may suffer strong interference from DL transmission of eNB2 in a U/D subframe. For example, the signal of UL transmission of the eNB1 cell is attenuated by path loss. However, although eNB2 is distant from the eNB1 cell, the DL signal of eNB2 is less attenuated due to LOS and thus serves as strong interference. In this case, in Embodiment 1-1 to 1-4, UL and DL are changed to reduce inter-cell interference of the present embodiment.

In addition, although eNB2 may not perform DL scheduling in the U/D subframe, DL transmit power is preferably reduced to solve inter-cell interference in terms of cell throughput. eNB1 may signal, to eNB2, a set of some subframes (for convenience, UL subset_type 2) among subframes which will be used for UL transmission within the cell thereof. Preferably, UL subset_type 2 may match a U/D subframe set or may be a subset thereof. Information about UL subset_type 2 may be mutually exchanged between eNBs or may be unidirectionally transmitted from one eNB to another eNB. Here, UL subset_type 2 may be used to indicate, to eNB2, a subframe in which problems occur in decoding if UL transmission suffers strong interference. Accordingly, eNB2 must not perform DL transmission in the subframe or may appropriately control DL power.

UL subset_type 2 may be indicated using a bitmap corresponding to a plurality of subframes and a bit value corresponding to a UL subframe belonging to UL subset_type 2 in the bitmap may be set to a specific value (e.g., 0 or 1). A bitmap size may correspond to one or a plurality of radio frames. In addition, UL subset_type 2 may be indicated using a reduced bitmap corresponding to only a UL subframe and a bit value corresponding to a UL subframe belonging to UL subset_type 2 in the bitmap may be set to a specific value (e.g., 0 or 1). If the reduced bitmap is used, the cell may additionally signal information about the UL-DL configurations to peripheral cells.

In addition, eNB2 may signal, to eNB1, a set of some subframes (for convenience, DL subset_type 2) among subframes which will be used for DL transmission within the cell thereof. Preferably, DL subset_type 2 may match a U/D subframe set or may be a subset thereof. Information about DL subset_type 2 may be mutually exchanged between eNBs or may be unidirectionally transmitted from one eNB to another eNB. Here, DL subset_type 2 may be used to indicate, to eNB1, a subframe in which DL transmission is not performed or DL transmit power is appropriately controlled. Accordingly, eNB1 may not schedule UL transmission in the subframe.

DL subset_type 2 may be indicated using a bitmap corresponding to a plurality of subframes and a bit value corresponding to a DL subframe belonging to DL subset_type 2 in the bitmap may be set to a specific value (e.g., 0 or 1). A bitmap size may correspond to one or a plurality of radio frames. In addition, DL subset_type 2 may be indicated using a reduced bitmap corresponding to only a DL subframe and a bit value corresponding to a DL subframe belonging to DL subset_type 2 in the bitmap may be set to a specific value (e.g., 0 or 1). If the reduced bitmap is used, the cell may additionally signal information about the UL-DL configurations to peripheral cells.

In the above embodiments, signaling (e.g., UL subset_type 2 or DL subset_type 2) exchanged between the two eNBs is interference characteristics of the UL subframe from the viewpoint of eNB1 but is attributes of DL transmission from the viewpoint of eNB2.

### Embodiment 3-1: CSI measurement

If the above-described inter-cell interference control methods are applied, a plurality of subframe sets having different interference environments may be present. For example, in FIG. 14, DL transmission power of one cell may be reduced in order to reduce interference when the cells perform different transmissions (UL/DL). Accordingly, different DL subframe sets having different interference amounts coexist. In the present embodiment, in order to accurately report a CSI of each subframe set, the UE may independently measure and report the respective CSIs of a subframe set in which DL transmit power is reduced and a subframe set in which DL transmit power is not reduced. For the same reason, radio resource management (RRM)/radio link monitoring (RLM) measurement may be also restricted according to subframe sets. RRM measurement includes reference signal received power (RSRP), reference signal received quality (RSRQ) and received signal strength indication (RSSI) measurement. That is, if the methods proposed by the above-described embodiments are used for interference coordination, UEs belonging to an eNB for reducing power may exclude a corresponding subframe or receive a subframe set for RRM/RLM measurement to perform measurement. For example, in FIG. 14, eNB2 may signal a subframe set, in which DL power is reduced, to the UE. In this case, the UE may perform RRM/RLM measurement in subframes other than the signaled subframe set. Alternatively, a subframe set for RRM/RLM measurement may be separately signaled.

### Embodiment 3-2: CSI measurement considering UL-DL configuration change

Although the case in which transmission directions collide in a given UL-DL configuration (e.g., Table 1) is focused upon in the above-described embodiments, the present invention is equally applicable to the case in which the UL-DL configuration is (dynamically) changed. For example, although UL transmission is specified according to the UL-DL configuration of Table 1, a UL subframe may be changed to DL transmission due to DL traffic increase. In this case, for interference control and CSI measurement, Embodiments 1-1, 1-2, 1-3, 1-4, 2 and 3-1 are equally/similarly applied.

If the UL/DL configuration of the subframe is (dynamically) changed, a measurement part may be newly defined or an existing measurement part may be changed/restricted. In the present embodiment, the cells may exchange the following information for change/restriction of the measurement part. If the UL/DL configuration of the subframe is (dynamically) changed in a specific cell, the cell may signal the changed UL/DL configuration to peripheral cells via X2 signaling. As another example, if the UL/DL configuration of the subframe is (dynamically) changed in a specific cell, the cell may signal, to peripheral cells, a subframe set in which a probability that the UL/DL configuration is changed in the future is low (or a subframe set in which the configuration is continuously maintained). Alternatively, a subframe set in which a probability that the UL/DL configuration is changed in the future is high may be signaled. That is, if the UL/DL configuration of the subframe is (dynamically) changed in a specific cell, the cell may signal, to peripheral cells, a subframe set in which a probability that the UL/DL configuration is changed in the future is high (or a subframe set in which the configuration is not continuously maintained). Such signaling may be generalized as signaling indicating a UL/DL configuration change probability of a subframe belonging to a subframe set. Here, the UL/DL configuration change probability may be set to any one of 0 or 1 for system simplification. Similarly, such signaling may be implemented to indicate a possibility that a specific subframe is used for a purpose different from the previous UL/DL configuration (e.g., whether a UL subframe is used for DL transmission).

The changed UL/DL configuration or the UL/DL configuration change probability (for convenience, UL/DL change information) may be indicated using a bitmap corresponding to a plurality of subframes. In this case, a bit value corresponding to each subframe includes UL/DL change information. A bitmap size may correspond to one or a plurality of radio frames. The UL/DL change information may be indicated using a reduced bitmap corresponding to only a UL subframe and a bit corresponding to the UL subframe may be set to UL/DL change information. If the reduced bitmap is used, the cell may additionally signal information about the UL-DL configurations to peripheral cells.

If such signaling is received, a neighboring cell may inform UEs of a measurement subframe set based on such signaling. The measurement subframe set may be transmitted via higher layer (e.g., RRC) signaling. The UEs of a cell located near a cell in which a DL/UL configuration is changed may perform DL channel (e.g., power) measurement of a source cell and/or a neighboring cell based on a subframe set signaled by the source (e.g., a subframe set indicating the same interference characteristics when the UL/DL configuration is changed).

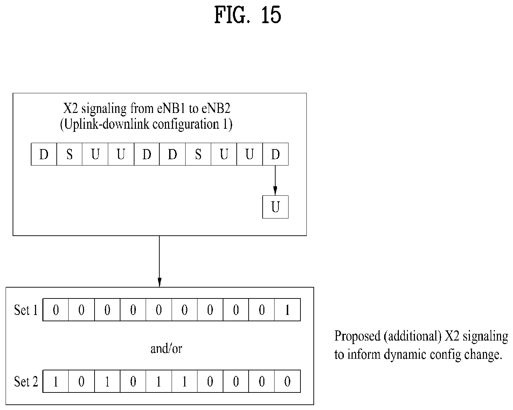

FIG. 15 shows a signaling process according to UL/DL configuration change. In the present embodiment, assume that a UL/DL configuration of a subframe may be (dynamically) changed in the eNB1 cell. In addition, assume that eNB1 uses UL-DL configuration 1 of Table 1.

Referring to FIG. 15, eNB1 may change a last subframe from DL transmission to UL transmission in order to increase UL resources. eNB1 may inform eNB2 of information about the changed UL/DL configuration. For example, eNB1 may signal, to eNB1, one subframe set or both subframe sets 1 and set 2. In the figure, subframe set 1 means subframes in which the UL/DL configuration is changed and subframe set 2 means subframes in which the UL/DL configuration is not changed or is fixed.

Based on the subframe set signaled from eNB1, eNB2 may inform UEs located within the cell of the subframe set for serving cell/neighboring cell measurement, CSI measurement, etc. via higher layer (e.g., RRC) signaling. For example, eNB2 may inform the UEs located within the cell of measurement subframes in a subset of set 2. That is, eNB2 may restrict a measurement part to DL subframes in which interference characteristics are not changed. Alternatively, unlike the above definition, if set 2 means subframes in which the UL/DL configuration may be changed, eNB2 may signal, to the UE, information indicating that measurement is performed in DL subframes excluding the corresponding subframes.

As another method, if eNB1 may change or has changed the UL/DL configuration, eNB2 may instruct the UE to perform measurement only with respect to a subframe in which the UL/DL configuration is not changed. For example, in the UL-DL configuration of existing LTE, since subframes 0, 1, 5 and 6 are used for BCH, SCH and paging, it is difficult to change these subframes to UL. Accordingly, if eNB1 may change or has changed the UL/DL configuration, eNB2 may instruct the UE to perform measurement in the DL subframes of indices 0, 1, 5 and 6. Meanwhile, if the number of patterns of measurement DL subframes is 2, eNB2 may inform the UE of the measurement DL subframes via a simple 1-bit signal.

### Embodiment 4: Cell edge UE detection

In the above-described embodiments, the cell edge UE is interpreted as a UE which is located in a region influenced by UL/DL transmission of a neighboring cell based on RSRP/RSRQ. First, a cell edge UE detection method considering a conventional channel state feedback process will be described. According to the conventional process, a UE may measure and transmit a channel state (e.g., RSRP/RSRQ) of a serving/neighboring cell to a serving eNB and the serving eNB may select a UE, which is strongly influenced by the neighboring cell, as a cell edge UE based on the feedback channel state of the serving/neighboring cell. That is, the cell edge UE is detected based on the DL channel state information of the serving/neighboring cell and thus inter-cell interference operation is performed.

However, as described with reference to FIG. 10, in a heterogeneous UL-DL configuration, strong interference may occur by UL transmission of a cell edge UE. Accordingly, interference occurring by UL transmission cannot be efficiently controlled using the DL channel state information alone, as in the conventional process. Accordingly, in the present embodiment, a method of, at an interfered UE, measuring interference occurring by UL transmission of the cell edge UE and controlling inter-cell interference based on the measured interference is proposed. More specifically, a UE of a serving cell may measure a UL signal (e.g., power) of a specific UE of a neighboring cell and report the measurement result to the serving cell. The measurement result may be shared between the serving cell and the neighboring cell via inter-eNB signaling (e.g., X2 interface). Thereafter, the serving cell and/or the neighboring cell may select a cell edge UE and perform scheduling with respect to the cell edge UE in order to reduce interference. For example, the serving cell may restrict DL scheduling of the cell edge UE in a U/D subframe and the neighboring cell may restrict UL scheduling of the cell edge UE in the U/D subframe. If the cell edge UE is detected according to the present embodiment, it is possible to more accurately perform inter-cell interference coordination and to prevent unnecessary waste of resources.

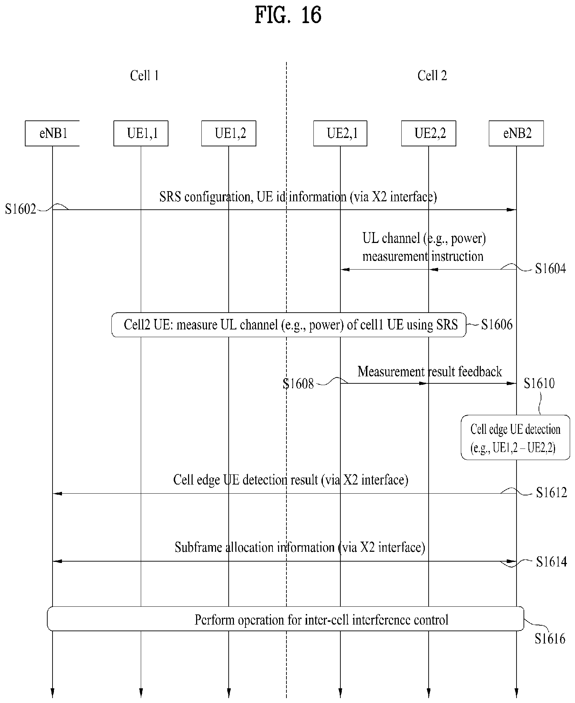

FIG. 16 shows cell edge UE detection and inter-cell interference control according to the present invention. For convenience, although two cells are shown in FIG. 16, the present embodiment is applicable to three or more cells. Here, different cells may mean different carriers in different eNBs or the same eNB For convenience, in the present embodiment, one cell corresponds to one eNB More specifically, assume that a cell 1 is served by eNB1 and a cell 2 is served by eNB2. In addition, assume that TDD UL-DL configurations (as shown in Table 1) are independently established in cell 1 and cell 2. For convenience, the cell 1/eNB1 may be referred to as a source cell and the cell 2/eNB2 may be referred to as a reception cell (or a cooperated cell or a neighboring cell).

Referring to FIG. 16, the source cell (that is, the cell 1) may signal, to the reception cell (that is, the cell 2), SRS configuration information used by each UE of the source cell via an X2 interface (S1602). The SRS configuration information includes a cell-specific SRS parameter and a UE-specific SRS parameter. In this case, a UE ID corresponding to each UE-specific SRS parameter may be signaled. Here, the reception cell may be a cell in which a UL/DL configuration will be changed (e.g., UL=>DL) in a specific subframe. In addition, the signaled source cell UE may include all UE or UEs which are determined to be adjacent to the reception cell based on RSRP/RSRQ, etc. After signaling of step S1602 is received, the reception cell instructs the UE of the reception cell to perform UL channel (e.g., power) measurement of the source cell UE (S1604). Signaling of step S1604 may include SRS configuration information. Signaling of step S1604 is commonly applicable to the UEs located within the cell or is differently applicable according to UE or UE group.

Thereafter, the reception cell UE measures the UL channel (e.g., power) of the source cell UE according to the SRS configuration of the source cell (S1606). Here, the reception cell UE that performs UL power measurement of the source cell UE may include all UE located within the reception cell or UEs that are determined to be adjacent to the source cell based on RSRP/RSRQ, etc. The reception cell UE performs UL channel (e.g., power) measurement of the source cell UE and then reports the measurement result to the reception cell (S1608). In this case, the SRS configuration used for measurement may be reported along with the UL measurement result. For example, UE2,1 may measure the SRS signals of the UE1,1/UE1,2 and report the measurement result along with the information indicating the SRS configuration. Similarly, UE2,2 may measure the SRS signals of the UE1,1/UE1,2 and report the measurement result along with the information indicating the SRS configuration.

Based on the measurement result of step S1608, the reception cell may determine the reception cell UE (e.g., UE2,2) with UL power exceeding a predetermined value as the cell edge UE of the reception cell (S1610). In addition, the reception cell may determine the source cell UE (e.g., UE1,2) corresponding to the SRS (configuration) measured by the UE (e.g., UE2,2) located at the edge of the reception cell as the cell edge UE of the source cell. That is, the UE located at the edge of the source cell means a UE which causes interference of a predetermined level or more with respect to the cell edge UE of the neighboring cell.

After the cell edge UE has been detected, the reception cell may transmit the cell edge UE detection result to the source cell via an X2 interface (S1612). The cell edge UE detection result may include the UE ID of the cell edge UE of the source cell. Thereafter, the source cell and the reception cell may exchange subframe allocation information, for inter-cell interference control (S1614). Here, the subframe allocation information includes signaling described in Embodiments 1-1, 1-2, 1-3, 1-4 and 1-5. Thereafter, the source cell and/or the reception cell may perform operation (e.g., UL transmission restriction, DL transmission restriction, etc.) for inter-cell interference control according to Embodiments 1-1, 1-2, 1-3, 1-4 and 1-5.

The present invention may be used for interference management in single cell operation and multi-cell operation and is applicable to a special case (e.g., a UE relay, etc.) in which UL and DL transmissions are mixed or a configuration is changed.

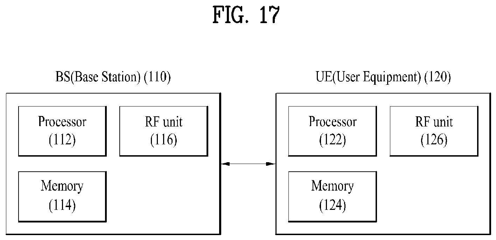

FIG. 17 shows an eNB and a UE to which one embodiment of the present invention is applicable. If a relay is included in a wireless communication system, communication between the eNB and the relay is performed in a backhaul link and communication between the relay and the UE is performed in an access link. Accordingly, the eNB or UE shown in FIG. 17 may be replaced with the relay.

Referring to FIG. 17, the wireless communication system includes a base station (BS) 110 and a UE 120. The BS 110 includes a processor 112, a memory 114 and a radio frequency (RF) unit 116. The processor 112 may be configured to implement the procedures and/or methods proposed by the present invention. The memory 114 is connected to the processor 112 to store a variety of information related to operation of the processor 112. The RF unit 116 is connected to the processor 112 to transmit and/or receive a RF signal. The UE 120 includes a processor 122, a memory 124 and a radio frequency (RF) unit 126. The processor 122 may be configured to implement the procedures and/or methods proposed by the present invention. The memory 124 is connected to the processor 122 to store a variety of information related to operation of the processor 122. The RF unit 126 is connected to the processor 122 to transmit and/or receive an RF signal. The BS 110 and/or the UE 120 may have a single antenna or multiple antennas.

The above-described aspects are proposed by combining constituent components and characteristics of the present invention according to a predetermined format. The individual constituent components or characteristics should be considered optional factors on the condition that there is no additional remark. If required, the individual constituent components or characteristics may not be combined with other components or characteristics. Also, some constituent components and/or characteristics may be combined to implement the aspects of the present invention. The order of operations disclosed in the aspects of the present invention may be changed. Some components or characteristics of any aspect may also be included in other aspects, or may be replaced with those of the other aspects as necessary. Moreover, it will be apparent that some claims referring to specific claims may be combined with other claims referring to the other claims other than the specific claims to constitute the embodiment or add new claims by means of amendment after the application is filed.

The above-mentioned aspects of the present invention are disclosed on the basis of a data communication relationship between a user equipment, a relay node and a base station. Specific operations to be conducted by the base station in the present invention may also be conducted by an upper node of the base station as necessary. In other words, it will be obvious to those skilled in the art that various operations for enabling the base station to communicate with the user equipment in a network composed of several network nodes including the base station will be conducted by the base station or other network nodes other than the base station. The term "Base Station" may be replaced with the terms fixed station, Node-B, eNode-B (eNB), or access point as necessary. The term "terminal" may also be replaced with the term User Equipment (UE), subscriber station (SS) or mobile subscriber station (MSS) as necessary.

The embodiments of the present invention can be implemented by a variety of means, for example, hardware, firmware, software, or a combination thereof. In the case of implementing the present invention by hardware, the present invention can be implemented through application specific integrated circuits (ASICs), digital signal processors (DSPs), digital signal processing devices (DSPDs), programmable logic devices (PLDs), field programmable gate arrays (FPGAs), a processor, a controller, a microcontroller, a microprocessor, etc.

If operations or functions of the present invention are implemented by firmware or software, the present invention can be implemented in a variety of formats, for example, modules, procedures, functions, etc. Software code may be stored in a memory unit so as to be executed by a processor. The memory unit may be located inside or outside of the processor, so that it can communicate with the aforementioned processor via a variety of well-known parts.

It will be apparent to those skilled in the art that various modifications and variations can be made in the present invention without departing from the scope of the invention. Thus, it is intended that the present invention cover the modifications and variations of this invention provided they come within the scope of the appended claims and their equivalents.

### [Industrial Applicability]

The present disclosure may be used for a terminal, a base station or other equipment of a wireless mobile communication system. More specifically, the present invention is applicable to a method and device for controlling inter-cell interference.

## Claims

1. A method of controlling inter-cell interference at a serving cell (eNB1) in a time division duplex, TDD, wireless communication system, the method comprising:
transmitting, to a neighboring cell (eNB2), first information indicating one or more first uplink, UL, subframes of radio frames of the serving cell;
receiving, from the neighboring cell, a message in response to the first information, wherein the message includes a ratio of subframes actually used by the neighboring cell to the one or more first UL subframes;
configuring one or more second UL subframes of the radio frames based on the ratio; and
restricting UL transmission in the configured one or more second UL subframes of the radio frames.

2. The method according to claim 1, wherein, the radio frames of the serving cell (eNB1) and radio frames of the neighboring cell have different uplink-downlink, UL-DL, configurations, and
the first one or more UL subframes collide with a downlink, DL, subframe of the neighboring cell (eNB2).

3. The method according to claim 1, wherein the first information include a bitmap used to indicate a DL almost blank subframe, ABS, pattern and one or more bits corresponding to one or more UL subframes in the bitmap are configured to predetermined values.

4. The method according to claim 1, wherein the restricting the UL transmission includes restricting UL scheduling to a predetermined User Equipment, UE, of the serving cell.

5. The method according to claim 4, further comprising receiving information indicating the predetermined UE from the neighboring cell.

6. The method according to claim 5, wherein the predetermined UE is determined based on a UL measurement value generated by a UE of the neighboring cell and the UL measurement value is a measurement value of a UL signal transmitted from a UE located within the serving cell.

7. The method according to claim 6, wherein the UL signal includes a sounding reference signal, SRS.

8. A base station configured to control inter-cell interference in a time division duplex,TDD, wireless communication system, the base station (110) comprising:
a radio frequency, RF, unit (116); and
a processor (112) configured to control the RF unit,
wherein the processor is configured to transmit, to a neighboring cell, first information indicating one or more first uplink, UL, subframes of radio frames of the serving cell , to receive, from the neighboring cell, a message in response to the first information, wherein the message includes a ratio of subframes actually used by the neighboring cell
to the one or more first UL subframes, to configure one or more second UL subframes of the radio frames based on the ratio and to restrict UL transmission in the configured one or more second UL subframes of the radio frames.

9. The base station according to claim 8, wherein:
the radio frames of the serving cell (eNB1) and radio frames of the neighboring cell (eNB2) have different uplink-downlink, UL-DL, configurations, and
the first one or more UL subframes collide with a downlink,DL, sub frame of the neighboring cell.

10. The base station according to claim 8, wherein the first and information include a bitmap used to indicate a DL almost blank subframe, ABS, pattern and one or more bits corresponding to one or more UL subframes in the bitmap are configured to predetermined values.

11. The base station according to claim 8, wherein the restricting the UL transmission includes restricting UL scheduling to a predetermined User Equipment, UE, of the serving cell.

12. The base station according to claim 11, wherein information indicating the predetermined UE is received from the neighboring cell.

13. The base station according to claim 12, wherein the predetermined UE is determined based on a UL measurement value generated by a UE of the neighboring cell and the UL measurement value is a measurement value of a UL signal transmitted from a UE located within the serving cell.

14. The base station according to claim 13, wherein the UL signal includes a sounding reference signal, SRS.

## Patentansprüche

1. Verfahren zur Steuerung der interzellularen Interferenz bei einer bedienenden Zelle (eNB1) in einem drahtlosen Zeitduplex-(TDD-)Kommunikationssystem, das Verfahren umfassend:
Senden, an eine Nachbarzelle (eNB2), einer ersten Information, die einen oder mehrere erste Uplink-(UL-)Unterrahmen von Funkrahmen der bedienenden Zelle angibt;
Empfangen, von der Nachbarzelle, einer Nachricht als Antwort auf die erste Information, wobei die Nachricht ein Verhältnis der tatsächlich von der Nachbarzelle genutzten Unterrahmen zu den einen oder mehreren ersten UL-Unterrahmen enthält;
Konfigurieren eines oder mehrerer zweiter UL-Unterrahmen der Funkrahmen auf der Grundlage des Verhältnisses; und
Beschränken der UL-Übertragung in den konfigurierten einen oder mehreren zweiten UL-Unterrahmen der Funkrahmen.

2. Verfahren nach Anspruch 1, wobei die Funkrahmen der bedienenden Zelle (eNB1) und die Funkrahmen der Nachbarzelle unterschiedliche Uplink-Downlink-(UL-DL-)Konfigurationen aufweisen und
die ersten einen oder mehreren UL-Unterrahmen mit einem Downlink-(DL-)Unterrahmen der Nachbarzelle (eNB2) kollidieren.

3. Verfahren nach Anspruch 1, wobei die erste Information eine Bitmap enthält, die zur Angabe eines DL-Fast-Leere-Unterrahmen-(ABS-)Musters verwendet wird, und ein oder mehrere Bits, die einem oder mehreren UL-Unterrahmen in der Bitmap entsprechen, auf vorgegebene Werte konfiguriert sind.

4. Verfahren nach Anspruch 1, wobei das Beschränken der UL-Übertragung ein Beschränken der UL-Zeitplanung auf eine vorgegebene Benutzereinrichtung (UE) der bedienenden Zelle einschließt.

5. Verfahren nach Anspruch 4, ferner umfassend: Empfangen von Informationen von der Nachbarzelle, welche die vorgegebene UE angeben.

6. Verfahren nach Anspruch 5, wobei die vorgegebene UE auf der Grundlage eines UL-Messwerts bestimmt ist, der von einer UE der Nachbarzelle generiert wird, und der UL-Messwert ein Messwert eines UL-Signals ist, das von einer innerhalb der bedienenden Zelle befindlichen UE gesendet wird.

7. Verfahren nach Anspruch 6, wobei das UL-Signal ein Sondierungsreferenzsignal (SRS) enthält.

8. Basisstation, die zur Steuerung der interzellularen Interferenz in einem drahtlosen Zeitduplex-(TDD-)Kommunikationssystem konfiguriert ist, die Basisstation (110) umfassend:
eine Funkfrequenz-(RF-)Einheit (116); und
einen Prozessor (112), der zur Steuerung der RF-Einheit konfiguriert ist,
wobei der Prozessor dazu konfiguriert ist, an eine Nachbarzelle eine erste Information, die einen oder mehrere erste Uplink-(UL-)Unterrahmen von Funkrahmen der bedienenden Zelle angibt, zu senden, von der Nachbarzelle eine Nachricht als Antwort auf die erste Information zu empfangen, wobei die Nachricht ein Verhältnis der tatsächlich von der Nachbarzelle genutzten Unterrahmen zu den einen oder mehreren ersten UL-Unterrahmen enthält, einen oder mehrere zweite UL-Unterrahmen der Funkrahmen auf der Grundlage des Verhältnisses zu konfigurieren und die UL-Übertragung in den konfigurierten einen oder mehreren zweiten UL-Unterrahmen der Funkrahmen zu beschränken.

9. Basisstation nach Anspruch 8, wobei:
die Funkrahmen der bedienenden Zelle (eNB1) und die Funkrahmen der Nachbarzelle (eNB2) unterschiedliche Uplink-Downlink-(UL-DL-)Konfigurationen aufweisen und
die ersten einen oder mehreren UL-Unterrahmen mit einem Downlink-(DL-)Unterrahmen der Nachbarzelle kollidieren.

10. Basisstation nach Anspruch 8, wobei die erste Information eine Bitmap enthält, die zur Angabe eines DL-Fast-Leere-Unterrahmen-(ABS-)Musters verwendet wird, und ein oder mehrere Bits, die einem oder mehreren UL-Unterrahmen in der Bitmap entsprechen, auf vorgegebene Werte konfiguriert sind.

11. Basisstation nach Anspruch 8, wobei das Beschränken der UL-Übertragung ein Beschränken der UL-Zeitplanung auf eine vorgegebene Benutzereinrichtung (UE) der bedienenden Zelle einschließt.

12. Basisstation nach Anspruch 11, wobei Informationen, welche die vorgegebene UE angeben, von der Nachbarzelle empfangen werden.

13. Basisstation nach Anspruch 12, wobei die vorgegebene UE auf der Grundlage eines UL-Messwerts bestimmt ist, der von einer UE der Nachbarzelle generiert wird, und der UL-Messwert ein Messwert eines UL-Signals ist, das von einer innerhalb der bedienenden Zelle befindlichen UE gesendet wird.

14. Basisstation nach Anspruch 13, wobei das UL-Signal ein Sondierungsreferenzsignal (SRS) enthält.

## Revendications

1. Procédé de contrôle de l'interférence intercellulaire au niveau d'une cellule de desserte (eNB1) dans un système de communication sans fil duplex par répartition dans le temps, TDD, le procédé comprenant :
la transmission, à une cellule voisine (eNB2), de premières informations indiquant une ou plusieurs premières sous-trames de liaison montante, UL, de trames radio de la cellule de desserte ;
la réception, à partir de la cellule voisine, d'un message en réponse aux premières informations, dans lequel le message comprend un rapport entre des sous-trames effectivement utilisées par la cellule voisine et les une ou plusieurs premières sous-trames UL ;
la configuration d'une ou plusieurs deuxièmes sous-trames UL des trames radio sur la base du rapport ; et
la limitation de la transmission UL dans les une ou plusieurs deuxièmes sous-trames UL configurées des trames radio.

2. Procédé selon la revendication 1, dans lequel les trames radio de la cellule de desserte (eNB1) et des trames radio de la cellule voisine ont des configurations différentes de liaison montante-liaison descendante, UL-DL, et
les une ou plusieurs premières sous-trames UL entrent en collision avec une sous-trame de liaison descendante, UL, de la cellule voisine (eNB2).

3. Procédé selon la revendication 1, dans lequel les premières informations comprennent un bitmap utilisé pour indiquer un modèle de sous-trame DL presque vide, ABS, et un ou plusieurs bits correspondant à une ou plusieurs sous-trames UL dans le bitmap sont configurés à des valeurs prédéterminées.

4. Procédé selon la revendication 1, dans lequel la limitation de la transmission UL comprend la limitation de planification UL à un équipement utilisateur, UE, prédéterminé de la cellule de desserte.

5. Procédé selon la revendication 4, comprenant en outre la réception d'informations indiquant l'UE prédéterminé à partir de la cellule voisine.

6. Procédé selon la revendication 5, dans lequel l'UE prédéterminé est déterminé sur la base d'une valeur de mesure UL générée par un UE de la cellule voisine et la valeur de mesure UL est une valeur de mesure d'un signal UL transmis à partir d'un UE situé dans la cellule de desserte.

7. Procédé selon la revendication 6, dans lequel le signal UL comprend un signal de référence de sondage, SRS.

8. Station de base configurée pour contrôler l'interférence intercellulaire dans un système de communication sans fil duplex par répartition dans le temps, TDD, la station de base (110) comprenant :
une unité de fréquence radio, RF, (116) ; et
un processeur (112) configuré pour commander l'unité RF, dans lequel le processeur est configuré pour transmettre, à une cellule voisine, des premières informations indiquant une ou plusieurs premières sous-trames de liaison montante, UL, de trames radio de la cellule de desserte, pour recevoir, à partir de la cellule voisine, un message en réponse aux premières informations, dans lequel le message comprend un rapport entre des sous-trames effectivement utilisées par la cellule voisine et les une ou plusieurs premières sous-trames UL, pour configurer une ou plusieurs deuxièmes sous-trames UL des trames radio sur la base du rapport et pour limiter la transmission UL dans les une ou plusieurs deuxièmes sous-trames UL configurées des trames radio.

9. Station de base selon la revendication 8, dans laquelle :
les trames radio de la cellule de desserte (eNB1) et des trames radio de la cellule voisine (eNB2) ont des configurations différentes de liaison montante-liaison descendante, UL-DL, et
les une ou plusieurs premières sous-trames UL entrent en collision avec une sous-trame de liaison descendante, DL, de la cellule voisine.

10. Station de base selon la revendication 8, dans laquelle les premières informations comprennent un bitmap utilisé pour indiquer un modèle de sous-trame presque vide, ABS, DL et un ou plusieurs bits correspondant à une ou plusieurs sous-trames UL dans le bitmap sont configurés à des valeurs prédéterminées.

11. Station de base selon la revendication 8, dans laquelle la limitation de la transmission UL comprend la limitation de planification UL à un équipement utilisateur, UE, prédéterminé de la cellule de desserte.

12. Station de base selon la revendication 11, dans laquelle des informations indiquant l'UE prédéterminé sont reçues à partir de la cellule voisine.

13. Station de base selon la revendication 12, dans laquelle l'UE prédéterminé est déterminé sur la base d'une valeur de mesure UL générée par un UE de la cellule voisine et la valeur de mesure UL est une valeur de mesure d'un signal UL transmis à partir d'un UE situé dans la cellule de desserte.

14. Station de base selon la revendication 13, dans laquelle le signal UL comprend un signal de référence de sondage, SRS.
